# EUROPÄISCHE PATENTSCHRIFT

(11) **EP 4 176 711 B1**
(45) Veröffentlichungstag und Bekanntmachung des Hinweises auf die Patenterteilung: **25.03.2026**
(21) Anmeldenummer: 22205330.8
(22) Anmeldetag: 03.11.2022
(51) Int. Cl.: A01K 1/00, A01K 15/00, A01K 15/02

(54) **VORRICHTUNG ZUM FÜHREN EINES TIERES**
DEVICE FOR GUIDING AN ANIMAL
DISPOSITIF POUR GUIDER UN ANIMAL

(30) Priorität: 04.11.2021 AT 5022621 U
(43) Veröffentlichungstag der Anmeldung: 10.05.2023
(73) Patentinhaber: Schauer Agrotronic GmbH, 4731 Prambachkirchen (AT)
(72) Erfinder: Tscherry, Amandus, 4730 Waizenkirchen (AT)
(74) Vertreter: Burger, Hannes

(56) Entgegenhaltungen:
- WO-A1-2011/089113
- DE-U1- 202018 003 747
- US-A1- 2008 017 132

## Beschreibung

Vorrichtung zum Führen eines Tieres, insbesondere eines Pferdes, in eine Ausführrichtung aus einem Bereich mit zumindest einer Drucklufterzeugungsvorrichtung.

Eine Vorrichtung der eingangs genannten Art ist aus der AT16094U1 bekannt geworden. Bei der bekannten Vorrichtung wird ein Tier, insbesondere ein Pferd, mittels aus Düsen austretender Druckluft aus einem Bereich geführt. Auch aus der DE202018003747U1 der Anmelderin wie auch der WO2011089113A1 sind derartige Vorrichtungen mit gleichem Zweck bekannt geworden.

Eine weiter Vorrichtung, die jedoch durch Aufschrecken das Vertreiben von Tieren aus einem Bereich, in dem die Präsenz von Tieren unerwünscht ist, zum Zweck hat, ist aus der US2008017132A1 bekannt geworden.

Aufgabe der vorliegenden Erfindung ist es, eine Vorrichtung bereitzustellen, mittels welcher ein Pferd schnell und in möglichst effizienter Weise aus einem Bereich, insbesondere aus einer Abrufstation geführt werden kann.

Diese Aufgabe wird durch eine Vorrichtung der eingangs genannten Art erfindungsgemäß dadurch gelöst, dass die Vorrichtung Schläuche zur Durchströmung mit Druckluft und zumindest eine Schlauchhalterung zur Anordnung und Ausrichtung der Schläuche entlang der Ausführrichtung aufweist, wobei die Schläuche mit der zumindest einen Drucklufterzeugungsvorrichtung gekoppelt und bei Durchströmung mit Druckluft bewegt sind.

Die erfindungsgemäße Lösung zeichnet sich dadurch aus, dass sie zum einen eine Führung des Tieres hervorgerufen durch eine Berührung mittels der Schläuche und zum anderen auch eine optische Führung des Tieres ermöglicht. Das Tier, insbesondere Pferd, bewegt sich von den durch Druckluft bewegten Schläuchen weg und wird so aus dem Bereich geführt.

Vorteilhafterweise ist die die zumindest eine Schlauchhalterung in und/oder an einer Umrandung des Bereiches angeordnet.

Die Schläuche können bei Durchströmen mit Druckluft in Richtung eines Körperteils des Tieres, insbesondere auf den Rumpf des Tieres und/oder auf den Kopfbereich des Tieres und/oder auf den Hals des Tieres bewegt sein.

Um eine besonders zuverlässiges Führen des Tiers aus dem Bereich zu gewährleisten, kann die Vorrichtung eine Steuervorrichtung zur Steuerung des Zeitpunktes der Abgabe der Druckluft und zur Steuerung der Dauer der Druckluftabgabe umfassen. Durch eine zeitlich versetzte Bewegung der Schläuche kann das Tier sehr effizient in Richtung eines Ausgangs bewegt werden.

Gemäß einer bevorzugten Variante der Erfindung kann die Druckluft kontinuierlich oder pulsierend abgegeben werden. Eine pulsierende Druckluft zeichnet sich dadurch aus, dass die Druckluft in nachfolgenden Zeitspannen mit unterschiedlichen Drücken abgegeben wird. Zur Erzeugung der pulsierenden Druckluft kann beispielsweise die Durchluftzufuhr in nachfolgenden Zeitspannen geöffnet und geschlossen werden.

Die Vorrichtung kann weiters eine Signalausgabevorrichtung zur Ausgabe eines akustischen Signals vor Abgabe von Druckluft umfassen. Das akustische Signal kann vor Abgabe der Druckluft abgegeben werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Draufsicht auf eine erfindungsgemäße Vorrichtung;
- Fig. 2: das Detail A in Fig. 1 und
- Fig. 3: einen Schnitt entlang der Linie B-B in Fig. 2.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

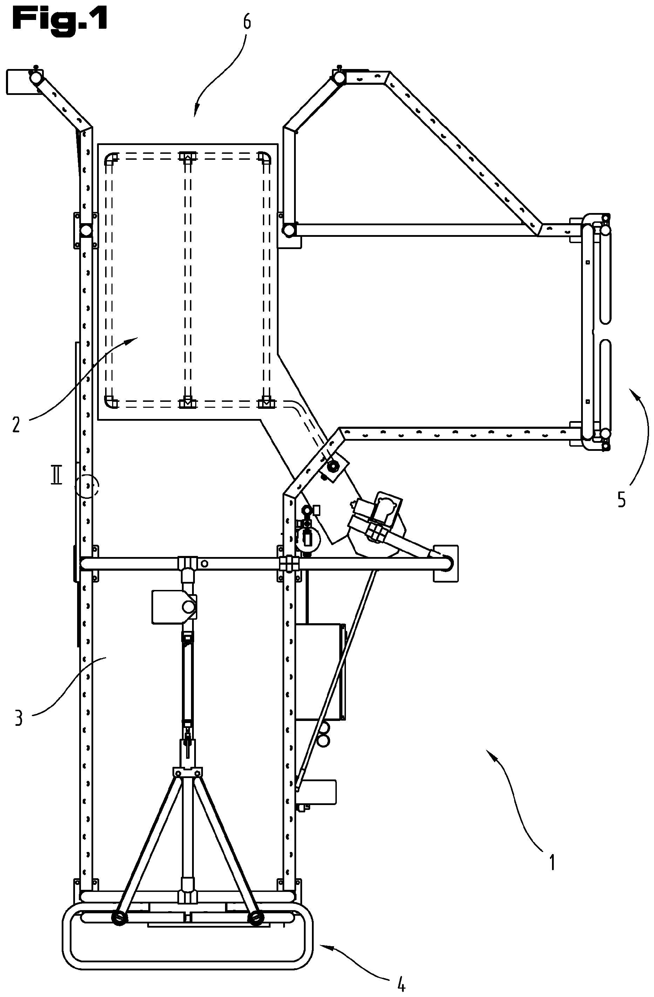

Figur 1 zeigt eine Vorrichtung 1 in Form einer Abrufstation mit einem Bereich 2, aus welchem das Tier, insbesondere Pferd, geführt werden soll. Im Folgenden wird anstelle von "Tier" nur der Begriff "Pferd" verwendet. Die Abrufstation umfasst eine die Abrufstation teilweise begrenzende Umrandung 3. Die Umrandung 3 umfasst einen Eingang 4, über welchen Eingang 4 das Pferd in die Abrufstation gelangt, und einen Ausgang 5, über welchen Ausgang 5 das Pferd aus dem Bereich 2 geführt wird. Der Eingang 4 und der Ausgang 5 sind in der Figur 1 verschlossen dargestellt.

Der Bereich 2 wird bei dem in Figur 1 dargestellten Ausführungsbeispiel zumindest teilweise durch die Umrandung 3 definiert. Der Bereich 2 weist eine dem Grundriss des Pferdes angepasste längliche Form auf. Eine Längsseite des Bereiches 2 verläuft parallel zu einem Teilbereich der Umrandung 3.

Das Pferd gelangt über den Eingang 4 zu der Abrufstation. Das Pferd erhält in der Abrufstation in einem Fressbereich 6 seine zugeteilte Futtermenge.

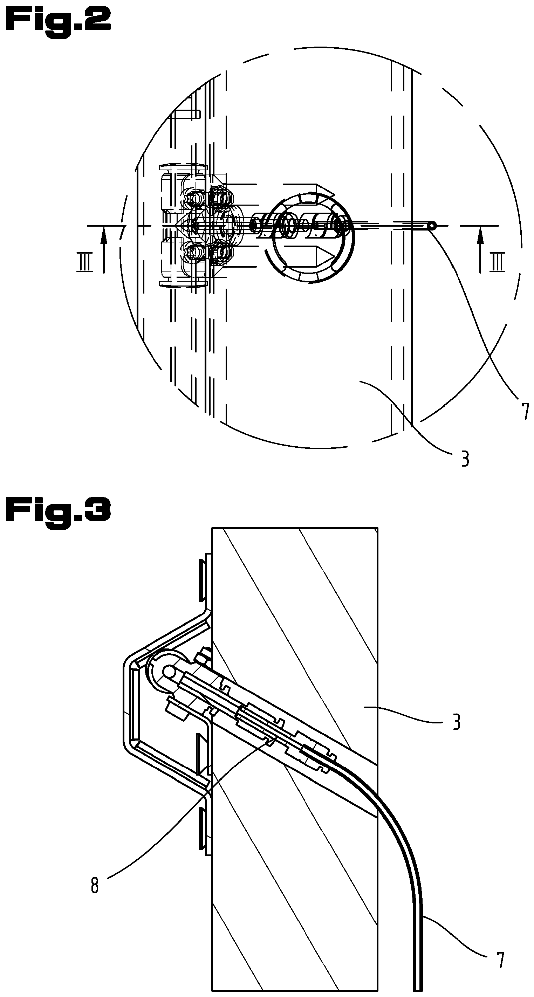

Nach einer definierten Zeitspanne, welche Zeitspanne das Pferd üblicher Weise zur Futteraufnahme benötigt, und/oder nach Aufnahme des gesamten Futters durch das Pferd wird über eine in Figur 1 nicht dargestellte Signalausgabevorrichtung ein akustisches Signal ausgegeben. Anschließend kann das Pferd mit einer in den Bereich 2 schwenkbaren Gerte aus dem Bereich 2 geführt werden. Zeitlich nachfolgend und ohne einen zwingenden kausalen Zusammenhang wird das im Bereich der Abrufstation befindliche Pferd über Beaufschlagung von in Fig. 2 und 3 mit dem Bezugszeichen 7 versehenen Schläuchen mit Druckluft, aus diesem Bereich 2 geführt, sofern das Pferd nicht zuvor den Bereich 2 verlassen hat. In Fig. 2 und 3 ist zwar nur ein einziger Schlauch 7 dargestellt, jedoch können an der Umrandung in vorgegebenen Abständen mehrere Schläuche 7 angeordnet sein. Beispielsweise kann an jeder der in Fig. 1 kreisförmig dargestellten Stellen der Umrandung 3 ein Schlauch 7 angeordnet sein.

Die Schläuche 7 werden von der durchströmenden Druckluft bewegt und können den Körper des Pferdes berühren, insbesondere dessen Brust, Hals oder Flanke. Hierzu können die Schläuche 7 eine entsprechende Länge aufweisen. Zusätzlich zu der Bewegung der Schläuche 7 kann auch die aus den vorderen, dem Pferd zugewandten offenen Enden der Schläuche 7 austretende Druckluft auf das Pferd auftreffen.

Die erfindungsgemäße Vorrichtung 1 umfasst hierzu Luftzuführleitungen 8 mit Luftaustrittsöffnungen, die jeweils mit einem der Schläuchen 7 verbunden sind. Die aus den Luftaustrittsöffnungen der Luftzuführleitungen austretende Druckluft durchströmt die jeweils mit ihnen verbundenen Schläuche 7, wodurch die Schläuche 7 bewegt werden. Die Luftzuführleitungen 8 können an der Umrandung 3 angebracht sein und diese beispielsweise ganz oder teilweise durchdringen, wie dies in Fig. 3 dargestellt ist. Die Umrandung 3 kann somit als Halterung für die Schläuche 7 dienen.

Jede Luftzuführleitung 8 kann durch je ein (dünnes) Rohr gebildet werden, über dessen Endbereich je einer der Schläuche 7 gezogen und ggfls. mit einem weiteren Sicherungsmittel wie einem Kabelbinder, einer Schlauchschelle, etc. fixiert sein kann. Natürlich können die Schläuche 7 auch anders mit den Luftzuführleitungen 8 verbunden sein, beispielsweise über entsprechende Adapter und/oder Zwischenstücke. Jede Luftzuführleitung 8 bildet somit eine Schlauchalterung für den jeweiligen Schlauch 7. Bei einer Beaufschlagung des Rohres mit Druckluft strömt die aus den Luftzuführleitungen 8 austretende Luft durch die Schläuche 7 in den Bereich 2.

Die Luftzuführleitungen 8 können mit einer Drucklufterzeugungsvorrichtung gekoppelt sein. Die Drucklufterzeugungsvorrichtung kann einen Druckluftbehälter, welcher über ein Magnetventil und einen Druckreduzierer mit den Luftzuführleitungen 8 verbunden sind, umfassen. Eine Steuervorrichtung der Vorrichtung 1 kann mit dem Magnetventil steuerungstechnisch verbunden.

Zum Ausführen des bei der Abrufstation befindlichen Pferdes kann beispielsweise eine pulsierende oder konstante Druckluft mit vorzugsweise maximal 4,0 bar bis 6,0 bar aus den Schläuchen 7 ausströmen. Die Schläuche 7 bzw. Endbereiche der Schläuche 7 sowie die aus den Schläuchen 7 an deren vorderen Enden austretende Druckluft kann am Pferd im Bereich der Brustwand oder Flanke auftreffen. Durch ein periodisches Schließen und Öffnen des Magnetventils kann eine pulsierende Druckluft erreicht. Mit Hilfe des Druckreduzierers wird der maximale Düsendruck der Druckluft auf maximal 4,0 bar bis 6,0 bar begrenzt. Die durch die Druckluft erzeugte Bewegung der Schläuche 7 kann einem Flattern mit einer zufälligen Änderung der Bewegungsrichtung der Schläuche 7 entsprechen.

Es sind auch in einem zum Eingang 4 angrenzenden Teilbereich der Abrufstation Schläuche 7 angeordnet, um zu verhindern, dass das Pferd die Abrufstation über den Eingang 4 verlässt. Die erfindungsgemäße Vorrichtung zeichnet sich dadurch aus, dass das Pferd selbst bei einem offenen Eingang 4 die Abrufstation über den Ausgang 5 verlassen würde.

Während der Futteraufnahme steht das in der Abrufstation befindliche Pferd im Wesentlichen parallel zu der Luftzuführleitung. Wenn mit Abschluss der Futteraufnahme durch das Pferd das Ausführen des Pferdes aus dem Bereich gestartet wird, so trifft die über die Schläuche abgegebene Druckluft bzw. Abschnitte der Schläuche oder zumindest Endbereiche der Schläuche auf die Brustwand oder die Flanke des Pferdes auf.

Ein Pferd, welches sich in einer Ausführrichtung bewegt, verspürt bevorzugterweise keine wesentlichen Berührungen durch die Schläuche auf der Brustwand.

Der Ausgang 5, welcher in Figur 1 als geschlossen dargestellt ist, wird vom Pferd beim Verlassen des Bereiches geöffnet.

Die Druckluft wird über die Schläuche 7 so lange abgegeben, bis das Pferd die Abrufstation über den Ausgang 5 verlässt oder verlassen hat. Letzteres ist in an sich bekannter Weise durch Verfahren nach dem Stand der Technik detektierbar.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Vorrichtung
- 2: Bereich
- 3: Umrandung
- 4: Eingang
- 5: Ausgang
- 6: Fressbereich
- 7: Schlauch
- 8: Luftzuführleitung

## Patentansprüche

1. Vorrichtung (1) zum Führen eines Tieres, insbesondere eines Pferdes, in eine Ausführrichtung aus einem Bereich (2) mit zumindest einer Drucklufterzeugungsvorrichtung, **dadurch gekennzeichnet, dass** die Vorrichtung (1) Schläuche (7) zur Durchströmung mit Druckluft und zumindest eine Schlauchhalterung zur Anordnung und Ausrichtung der Schläuche (7) entlang der Ausführrichtung aufweist, wobei die Schläuche (7) mit der zumindest einen Drucklufterzeugungsvorrichtung gekoppelt und bei Durchströmung mit Druckluft bewegt sind.

2. Vorrichtung nach Anspruch 1, **dadurch gekennzeichnet, dass** die zumindest eine Schlauchhalterung in und/oder an einer Umrandung (3) des Bereiches (2) angeordnet ist.

3. Vorrichtung nach Anspruch 1 oder 2, **dadurch gekennzeichnet, dass** die Schläuche (7) bei Durchströmen mit Druckluft in Richtung eines Körperteils des Tieres, insbesondere auf den Rumpf des Tieres und/oder auf den Kopfbereich des Tieres und/oder auf den Hals des Tieres bewegt sind.

4. Vorrichtung nach einem der Ansprüche 1 bis 3, **dadurch gekennzeichnet, dass** die Vorrichtung (1) eine Steuervorrichtung zur Steuerung des Zeitpunktes der Abgabe der Druckluft und zur Steuerung der Dauer der Druckluftabgabe umfasst.

5. Vorrichtung nach Anspruch 4, **dadurch gekennzeichnet, dass** mittels der Steuervorrichtung die Druckluft pulsierend oder konstant geregelt ist.

6. Vorrichtung nach einem der Ansprüche 1 bis 5, **dadurch gekennzeichnet, dass** die Vorrichtung eine Signalausgabevorrichtung zur Ausgabe eines akustischen Signals vor Abgabe von Druckluft umfasst.

## Claims

1. A device (1) for guiding an animal, in particular a horse, in an outward direction from an area (2) with at least one compressed air generating device, **characterized in that** the device (1) has hoses (7) for the through-flow of compressed air and at least one hose holder for arranging and aligning the hoses (7) along the outward direction, wherein the hoses (7) are coupled to the at least one compressed air generating device and are moved during the through-flow of compressed air.

2. The device according to claim 1, **characterized in that** the at least one hose holder is arranged in and/or on a border (3) of the area (2).

3. The device according to claim 1 or 2, **characterized in that** the hoses (7) are moved in the direction of a body part of the animal, in particular towards the torso of the animal and/or towards the head area of the animal and/or towards the neck of the animal, during the through-flow of compressed air.

4. The device according to one of claims 1 to 3, **characterized in that** the device (1) comprises a controller for controlling the time of the discharge of compressed air and for controlling the duration of the discharge of compressed air.

5. The device according to claim 4, **characterized in that** the compressed air is controlled in a pulsating or constant manner by means of the controller.

6. The device according to one of claims 1 to 5, **characterized in that** the device comprises a signal output device for outputting an acoustic signal before compressed air is discharged.

## Revendications

1. Dispositif (1) permettant de guider un animal, en particulier un cheval, dans une direction de de travail à partir d'une zone (2) avec au moins un dispositif de génération d'air comprimé, **caractérisé en ce que** le dispositif (1) présente des tuyaux (7) permettant le passage d'air comprimé et au moins un support de tuyau permettant d'agencer et d'orienter les tuyaux (7) le long de la direction de travail, dans lequel les tuyaux (7) sont couplés au au moins un dispositif de génération d'air comprimé et sont déplacés lors du passage de l'air comprimé.

2. Dispositif selon la revendication 1, **caractérisé en ce que** le au moins un support de tuyau est agencé dans et/ou au niveau d'une bordure (3) de la zone (2).

3. Dispositif selon la revendication 1 ou 2, **caractérisé en ce que**, lors du passage de l'air comprimé, les tuyaux (7) sont déplacés en direction d'une partie du corps de l'animal, en particulier sur le tronc de l'animal et/ou sur la région de la tête de l'animal et/ou sur le cou de l'animal.

4. Dispositif selon l'une quelconque des revendications 1 à 3, **caractérisé en ce que** le dispositif (1) comprend un dispositif de commande permettant de commander le moment de la sortie de l'air comprimé et permettant de commander la durée de la sortie d'air comprimé.

5. Dispositif selon la revendication 4, **caractérisé en ce que** l'air comprimé est régulé de manière pulsée ou constante au moyen du dispositif de commande.

6. Dispositif selon l'une quelconque des revendications 1 à 5, **caractérisé en ce que** le dispositif comprend un dispositif d'émission de signal permettant d'émettre un signal acoustique avant la sortie de l'air comprimé.
